# EUROPEAN PATENT APPLICATION

(11) **EP 1 847 731 A1**
(43) Date of publication of application: **24.10.2007**
(21) Application number: 07007183.2
(22) Date of filing: 05.04.2007
(51) Int. Cl.: F16H 55/56, F16H 9/18

(54) **Driven pulley device**

(30) Priority: 06.04.2006 IT UD20060094
(71) Applicant: Del Negro, Michele, 33035 Martignacco UD (IT); Del Negro, Nicola, 33035 Martignacco UD (IT)
(72) Inventor: Del Negro, Michele, 33035 Martignacco UD (IT); Del Negro, Nicola, 33035 Martignacco UD (IT)
(74) Representative: Cragnolini, Sergio

(57) **Abstract**

Adjustable pulley for a V-belt continuously variable transmission (CVT). A first pulley halve (1) is fixed to a shaft (11). A second pulley halve (2) is mounted on said shaft (11) in a free rotatable manner. Said second pulley halve (2) comprises a cam (3) which is in contact with a roller (5) having an axis (4). The roller (5) is fixed to cylindrical hub (6), which is mounted on the shaft (11) for rotation therewith, but which is axially movable on said shaft (11). The cylindrical hub (6) is biased by a spring.

## Description

The present invention refers to a driven pulley device for a variator, constituted by two expansible pulley halves and by mechanisms which adjust its opening/closure.

Usually, current driven pulleys of variators consist of two plates which have profiles in the shape of truncated cones, one plate of which being rigidly coupled to the transmission hub while the other plate slides along said transmission hub (following a forced path constituted by a guide/cam), progressively compressing a spring.

However, current driven pulleys cannot, at a given aperture of the plates, vary the pressure of the spring to increase or decrease it in order to be able to optimize the pressure on the belt (e. g., during acceleration, increase the pressure of the spring for greater traction and vice versa release the pressure of the spring during normal running of the vehicle), maintaining high pressures even when this is not strictly necessary, such as at moderate speeds of the vehicle.

The aim of the present invention is to obtain a driven pulley which allows the variator to maintain a more ideal transmission ratio, with significant saving of engine fuel, and at the same time makes it possible to increase automatically the pressure on the belt only when this is strictly necessary (e. g., during acceleration and/or when climbing), thus improving the performance and the transmission ratio with consequent reduced pollution of the environment while at the same time maintaining or increasing the traction performance of the variator.

Last but not least, an object of the invention is to obtain a device which is easy and economical to provide without using particularly qualified labor or complex technologies, in view of the simplicity of the elements used.

This aim and others are achieved by the device according to which the invention is constituted by an expansible pulley, which is composed mainly of a transmission hub, plates, contoured cylinders, cams, guides, pivots, a spring, a cylinder/hub, rollers/wheels and screws, according to which the device is characterized in that it is constituted by an expansible pulley formed by two plates having profiles in the shape of truncated cones, which are directed toward each other so as to constitute a race, one plate of which being fixed and rigidly coupled to the transmission hub, the other plate (free to move) being fitted without constraints on the same transmission hub, and a contoured cylinder with cams being keyed to said latter (freely movable) plate, said cams being in contact with rollers/wheels which rotate about pivots which are connected on a contoured cylinder, which is also provided with guides which slide on pivots connected to the transmission hub on which the contoured cylinder also slides, a spring being furthermore provided thereat which is inserted between said contoured cylinder (provided with rollers/wheels and guides) and a contoured cylinder/hub connected in the final part of the transmission hub.

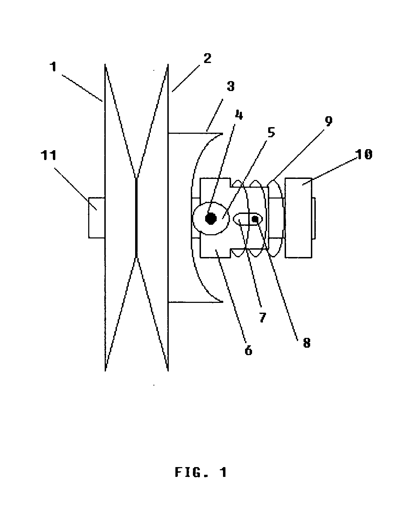

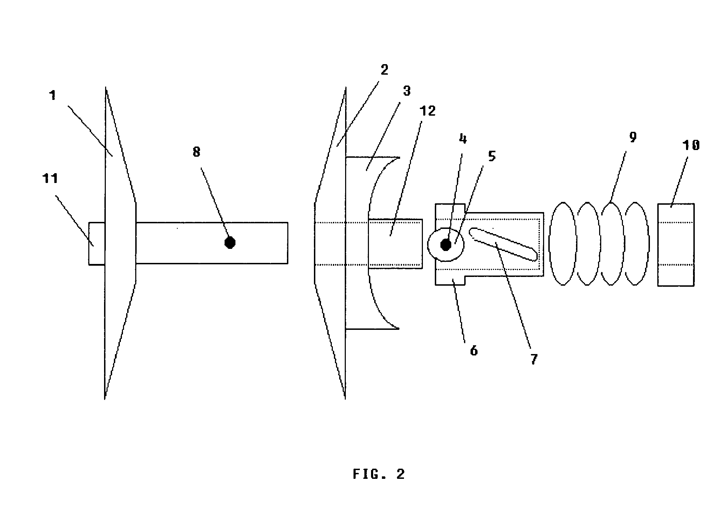

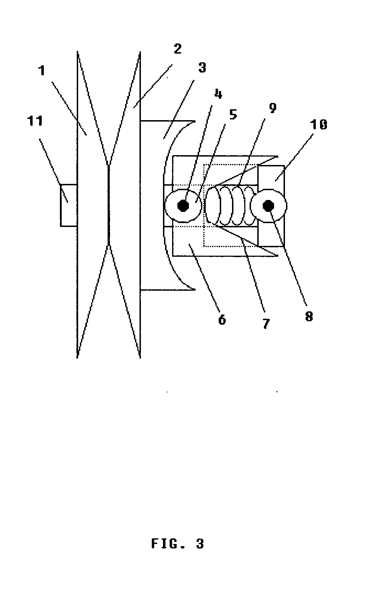

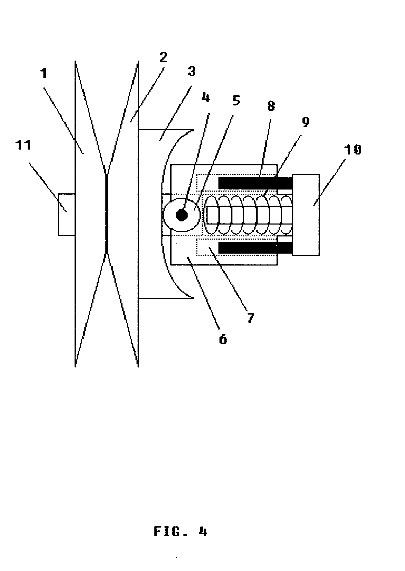

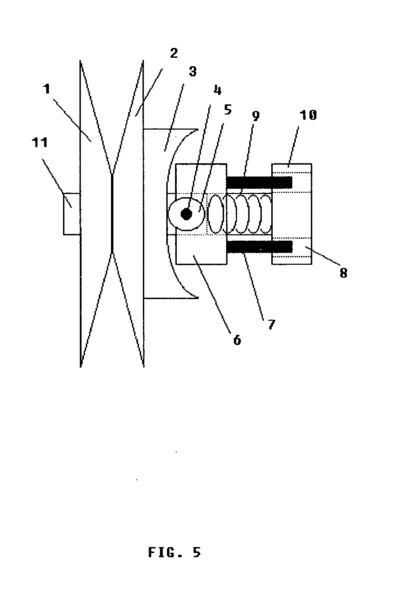

Further characteristics and advantages of the invention will become better apparent from the description of a preferred but not exclusive embodiment of the driven pulley device, illustrated by way of non-limiting example in the drawing, wherein Figure 1 is a top view of the main body of the device according to the invention, in which the fixing, supporting, adjustment and terminal parts have been omitted for the sake of clarity.

The device shown in the drawing (Figure 1) comprises an expansible pulley formed by two plates (1), (2).

Each plate (1), (2) has a profile in the shape of a truncated cone, and the two plates 1, 2 are directed toward each other so as to constitute a race.

The plate (1) is fixed and rigidly coupled to the transmission hub (11).

A contoured cylinder with cams (3) is rigidly keyed to the plate (2). The plate (2), with its contoured cylinder with cams (3), is fitted without constraints on said transmission hub (11).

The contoured cylinder (6) is provided with pivots (4), about which rollers/wheels (5) turn. Furthermore, the contoured cylinder (6) is also provided with guides (7) for guiding its movement on the transmission hub (11) on which it slides.

The pivots (8) are connected to the transmission hub (11) and guide the sliding movement of the contoured cylinder (6) by virtue of its guides (7).

The spring (9) is inserted between the contoured cylinder (6) and a contoured cylinder/hub (10), which is connected in the final part of the transmission hub (11).

For the sake of clarity, the elements for connection to the final transmission and other mechanical parts required for adjustment and retention of the components themselves have been omitted.

The operation of the driven pulley occurs by means of a variator, which is provided with a V-belt which connects the driving pulley to this particular driven pulley.

The variation of the diameter of the driving pulley on which the V-belt runs generates the variation of the transmission ratio and consequently the elongation or shortening of the V-belt, which for this very reason acts on the driven pulley, moving the movable plate (2), which is kept pressed against the fixed one (1) by virtue of the force applied by the spring (9).

For the sake of clarity, the spring (9), by abutting against the cylinder/hub (10), keeps the contoured cylinder (6) constantly pushed, and said cylinder (6) keeps the plate (2) pushed toward the plate (1) by means of the pivots (4), the rollers/wheels (5) and the cams (3).

Furthermore, as the traction force increases (for example during a climb or during acceleration), the plate (2), since it is free to move, also turns partially on the transmission hub (11) together with the cams (3) of the contoured cylinder which is keyed thereto. In turn, the cams (3) cause, with their movement, the sliding of the rollers/wheels (5), which, being connected to the pivots (4) of the contoured cylinder (6), determine the sliding of said contoured cylinder (6), which compresses the spring (9) on the cylinder/hub (10).

This produces a higher pressure on the spring (9), in turn causing a greater increase in pressure on the belt caused by the thrust of the plate (2) toward the plate (1), consequently increasing the traction force of the variator, generating and maintaining, at the same time, a better traction/engine torque speed ratio.

This driven pulley device makes it possible to use less loaded springs, determining a reduced wear of the belt and a higher traction efficiency, and at the same time to increase the pressure of the plates (1), (2) on the belt only when this is strictly necessary, consequently obtaining a reduced slippage of the belt during the phases of intense stresses and most of all a reduced fuel consumption during normal use, with higher engine and torque efficiency and reduced environmental pollution.

The invention thus conceived is susceptible of numerous modifications and variations, all of which are within the scope of the inventive concept; all the details may furthermore be replaced by other technically equivalent ones.

## Claims

1. A driven pulley device, **characterized in that** the device consists of an expansible pulley, which is composed mainly of a transmission hub, plates, contoured cylinders, cams, guides, pivots, a spring, a cylinder/hub, rollers/wheels and screws, according to which the device is **characterized in that** it consists of an expansible pulley formed by two plates having profiles in the shape of truncated cones, which are directed toward each other so as to constitute a race, one plate of which being fixed and rigidly coupled to the transmission hub and the other plate (free to move) being fitted without constraints on the same transmission hub, and a contoured cylinder with cams being keyed to the latter (freely movable) plate, said cams being in contact with rollers/wheels which rotate about pivots which are connected on a contoured cylinder, which is also provided with guides which slide on pivots connected to the transmission hub on which the contoured cylinder also slides, a spring being furthermore provided thereat which is inserted between said contoured cylinder (provided with rollers/wheels and guides) and a contoured cylinder/hub connected in the final part of the transmission hub.

2. The driven pulley device according to claim 1, **characterized in that** the pivots (8) on which the guides (7) of the contoured cylinder (6) slide can be connected directly to the transmission hub (11) or indirectly or partially connected to the transmission hub (11) by virtue of a cylinder/hub (10) which is connected thereto (11), as shown in Figure 3.

3. The driven pulley device according to claim 1, **characterized in that** the guides (7) of the contoured cylinder (6) can also consist of curved/contoured guides or of cams as shown in Figures 2 and 3 or by straight guides as shown in Figure 4.

4. The driven pulley device according to claim 1, **characterized in that** the conical plate (2), provided with a central hole for sliding on the transmission hub (11), can have a supporting base which is elongated by virtue of a cylinder (12) which is keyed thereto, as shown in Figure 2, thus reducing vibration and increasing smoothness of operation.

5. The driven pulley device according to claims 1 and 4, **characterized in that** the contoured cylinder (6) can slide also or partially on the cylinder (12) which is keyed to the plate (2) (see Figure 2) in addition to being able to slide partially on the transmission hub (11), in order to be able to increase the smoothness of operation of the device.

6. The driven pulley device according to claims 1 and 5, **characterized in that** the cylinders (6, 12) can slide with respect to each other, and in turn on the transmission hub (11), by virtue of balls or sealing gaskets in order to facilitate sliding, precision and their contact seal on the transmission hub (11).

7. The driven pulley device according to claim 1, **characterized in that** the cams (3) of the contoured cylinder which is keyed to the conical plate (2) can have a different degree of curvature of the cams (3) between clockwise and anticlockwise, so as to allow better operation between when the engine is accelerating and when the vehicle is braking.

8. The driven pulley device according to claim 1, **characterized in that** the transmission hub (11) can also be provided with a keying slot for connection to the transmission shaft.

9. The driven pulley device according to claim 1, **characterized in that** the rollers/wheels (5) can also be partially contoured for better grip on the cams (3).

10. The driven pulley device according to claim 1, **characterized in that** the pivots (8) can be provided with rollers/wheels which are also be contoured in order to facilitate a linear sliding, as shown in Figure 3.

11. The driven pulley device according to claim 1, **characterized in that** the guides (7) can also consist of guiding bars which are connected and keyed to the contoured cylinder (6), said guides sliding on sliding blocks or in holes which can also be through holes (8) provided in the cylinder/hub (10), which in turn is connected to the transmission hub (11) as shown in Figure 5.
